# EUROPÄISCHE PATENTSCHRIFT

(11) **EP 3 658 414 B1**
(45) Veröffentlichungstag und Bekanntmachung des Hinweises auf die Patenterteilung: **08.09.2021**
(21) Anmeldenummer: 19742696.8
(22) Anmeldetag: 08.07.2019
(51) Int. Cl.: B60R 5/04

(54) **FAHRZEUG MIT EINEM LADERAUM UND EINEM DEMSELBEN ZUGEORDNETEN LADEBODENSYSTEM SOWIE MONTAGEVERFAHREN DAZU**
VEHICLE WITH A LOADING AREA AND A LOADING BASE SYSTEM PAIRED WITH SAID LOADING AREA, AND METHOD FOR INSTALLING SAME
VÉHICULE COMPRENANT UN ESPACE DE CHARGEMENT ET UN SYSTÈME DE PLANCHER DE CHARGEMENT ASSOCIÉ À CELUI-CI AINSI QUE PROCÉDÉ DE MONTAGE À CET EFFET

(30) Priorität: 02.08.2018 DE 102018212903
(43) Veröffentlichungstag der Anmeldung: 03.06.2020
(73) Patentinhaber: VOLKSWAGEN AKTIENGESELLSCHAFT, 38440 Wolfsburg (DE)
(72) Erfinder: GAUGER, Stefan, 38446 Wolfsburg (DE); SEVERIN, Oliver, 12555 Berlin (DE)
(86) Internationale Anmeldenummer: PCT/EP2019/068239
(87) Internationale Veröffentlichungsnummer: WO 2020/025258

(56) Entgegenhaltungen:
- EP-A1- 2 399 783
- DE-A1-102012 023 470
- DE-A1-102013 018 037
- DE-A1-102015 008 235
- DE-A1-102015 201 054

## Beschreibung

Die Erfindung betrifft ein Fahrzeug, insbesondere ein Kraftfahrzeug, mit einem Laderaum und einem demselben zugeordneten Ladebodensystem nach dem Oberbegriff des Patentanspruchs 1 der Erfindung. Gemäß der Merkmalskombination des Patentanspruchs 7 der Erfindung betrifft dieselbe ferner ein Verfahren zur Montage zumindest eines Ladebodens in einem Laderaum eines Fahrzeugs, insbesondere eines Kraftfahrzeugs.

Die DE 10 2010 053 533 A1 offenbart ein Kraftfahrzeug mit einem hinter einer Sitzanordnung angeordneten Laderaum, der unten durch einen Ladeboden und seitlich durch Seitenwände des Fahrzeugs begrenzt ist. Ladeboden und Seitenwände weisen auf deren dem Laderaum zugwandten Seiten einen Teppich auf. Dem Laderaum ist ein plattenförmiger Ladebodenaufsatz zugeordnet, welcher lose auf dem Ladeboden aufliegt und demgemäß verschiebbar ist. Der Ladebodenaufsatz soll es ermöglichen, auf demselben gelagertes Ladegut einfach und komfortabel weit in den Laderaum zu verbringen. Darüber hinaus sind Mittel zum Festlegen des Ladebodenaufsatzes im Bereich der Seitenwände vorgesehen, um eine unbeabsichtigte Relativverschiebung zwischen Ladebodenaufsatz und Ladeboden zu verhindern.

Die DE 10 2015 201 054 A1 beschreibt eine Ladebodenanordnung in einem Kraftfahrzeug mit einem in zwei Ablagepositionen höhenverstellbaren Ladeboden. Der Ladeboden weist zur besseren Handhabung desselben einen ersten vorderen und einen zweiten hinteren Ladenbodenteil auf, welche mittels eines Scharniers untereinander schwenkbar verbunden sind. In einer ersten oberen Ablageposition liegen die Ladenbodenteile auf an der Fahrzeugkarosserie oder an inneren Verkleidungsteilen derselben angebrachten Ablagebänken auf. In einer zweiten unteren Ablageposition liegt der Ladeboden auf dem Fahrzeugboden auf, wobei der erste vordere Ladenbodenteil eine definierte Schräglage einnimmt und so einen freien Durchgang zwischen dem Fahrzeugboden und einer Rücksitzbank des Kraftfahrzeugs abdeckt.

Die DE 2015 008 235 A1 beschreibt ein Fahrzeug mit einem wannenförmigen Ladeboden, welcher mittels eines umlaufenden Randbereiches zumindest abschnittsweise auf einem Abschnitt der Fahrzeugkarosserie aufliegt.

Die DE 10 2012 023 470 A1 beschreibt eine Anordnung zur Lagerung eines Ladebodens eines Fahrzeugs in zumindest zwei unterschiedlichen Höhenpositionen. Eine erste Höhenposition ist durch eine Karosseriebodenstruktur des Laderaums des Fahrzeugs vorgegeben. Eine zweite Höhenposition ist durch zumindest ein auf der besagten Karosseriebodenstruktur fixiertes oder fixierbares Auflageteil vorgegeben. Das Auflageteil weist zwei seitlich des Laderaums angeordnete Längsträgerelemente auf, welche mittels eines Querträgerelements untereinander lösbar verbunden sind.

Die DE 10 2013 018 037 A1 beschreibt eine Laderaumanordnung für ein Fahrzeug mit einer Ladeplatte und einem vorderen, mit der Ladeplatte schwenkbar verbundenen Klappenabschnitt. In einer Tiefstellung liegt die Ladeplatte auf dem Laderaumboden auf, wogegen der besagte Klappenabschnitt eine Hochstellung einnimmt, indem dieser nach oben geklappt ist. In einer Hochstellung liegt die Ladeplatte beabstandet zum Laderaumboden auf an Seitenwänden des Laderaums angebrachten Stützeinrichtungen auf, wogegen der besagte Klappenabschnitt eine Tiefstellung einnimmt, indem dieser nach unten geklappt ist.

Die EP 2 399 783 A1 beschreibt einen Kulissenmechanismus zum Anheben einer Bodenplatte in einem Fahrzeugkofferraum. Der Kulissenmechanismus ist in der Seitenverkleidung des Fahrzeugkofferraums spiegelbildlich an beiden Seiten ausgebildet. Ein jeder Kulissenmechanismus weist Kulissenführungen für in denselben verschiebbar geführte Bolzen der Bodenplatte auf. Die Kulissenführungen erlauben es, die Bodenplatte von einer Grundposition, in welcher die Bodenplatte auf dem Kofferraumboden abgelegt ist, in eine erhöhte horizontale Lage zu verstellen.

Aus der Praxis ist es bekannt, eine sich an einen Laderaum anschließende hintere Rücksitzbank mit einer nach Fahrzeug-vorn umklappbaren Rückenlehne auszubilden, um insbesondere die im Laderaum zur Verfügung stehende Ladefläche in die Fahrgastzelle hinein zu vergrößern und so die Ladekapazität des Fahrzeugs zu vergrößern respektive die Lademöglichkeiten zu verbessern. Gelegentlich ist jedoch festzustellen, dass die Ebene der von der umgeklappten Rückenlehne bereitgestellten Ladefläche oberhalb der Ebene der Ladefläche des Laderaums angeordnet ist.

Aufgabe der Erfindung ist es, mittels einfacher und kostengünstiger Maßnahmen einen Laderaum eines Fahrzeugs, insbesondere eines Kraftfahrzeugs, mit einem Ladeboden zu bestücken, vorzugsweise mit besagtem Ladeboden nachzurüsten, welcher insbesondere auch dem vorstehend beschriebenen nachteiligen Umstand Rechnung trägt. Ferner ist es Aufgabe der Erfindung, ein geeignetes Verfahren zur Montage zumindest eines Ladebodens in einem Laderaum eines Fahrzeugs, insbesondere eines Kraftfahrzeugs, anzugeben.

Ausgehend von einem Fahrzeug, insbesondere Kraftfahrzeug, mit einem Laderaum, welcher in Fahrzeugquerrichtung (y-Richtung) gesehen gegenüberliegend angeordnete und an der Karosserie des Fahrzeugs lösbar befestigte Laderaumseitenverkleidungen aufweist, sowie mit einem dem Laderaum des Fahrzeugs zugeordneten Ladebodensystem, wobei das Ladebodensystem zumindest je einen an den gegenüberliegend angeordneten Laderaumseitenverkleidungen montierten oder montierbaren Aufnahmebock sowie zumindest einen im montierten Zustand der Aufnahmeböcke auf diesen abgelegten oder ablegbaren oder in diesen eingelegten oder einlegbaren Ladeboden aufweist, wird die gestellte Aufgabe dadurch gelöst, dass die Aufnahmeböcke derart im Laderaum montiert oder montierbar sind, dass eine vom zumindest einen auf den Aufnahmeböcken abgelegten oder ablegbaren oder in diesen eingelegten oder einlegbaren Ladeboden gebildete erste Ladefläche bei einer nach Fahrzeug-vorn umgelegten Rückenlehne einer hinteren Rücksitzbank des Fahrzeugs, deren rückseitige Fläche im umgelegten Zustand der Rückenlehne eine zweite Ladefläche ausbildet, in der Ebene der besagten zweiten Ladefläche angeordnet ist.

Vorteilhaft ermöglicht das dem Laderaum des Fahrzeugs zugeordnete Ladebodensystem eine einfache und kostengünstige Montage zumindest eines Ladebodens im Laderaum. Besonders vorteilhaft zeichnet sich diese Lösung im Falle einer Nachrüstung besagten Laderaums mit zumindest einem Ladeboden aus, indem beispielsweise ausgehend von einer Basisausführung des Fahrzeugs, welche keinen gesonderten beziehungsweise zusätzlichen Ladeboden aufweist, auf Kundenwunsch nachträglich besagter gesonderter beziehungsweise zusätzlicher Ladeboden in den Laderaum einbaubar ist.

Die Unteransprüche beschreiben bevorzugte Weiterbildungen oder Ausgestaltungen der Erfindung.

Gemäß einer einfachen und kostengünstigen Maßnahme der Erfindung weisen vorteilhafterweise die Laderaumseitenverkleidungen Mittel zur Befestigung der Aufnahmeböcke an denselben auf.

Gemäß einer besonders praxisnahen Ausführung der Erfindung sind besagte Mittel zur Befestigung durch Bohrungen und/oder Ausnehmungen zur Aufnahme korrespondierender Befestigungselemente gebildet.

Bevorzugt sind die Bohrungen und/oder Ausnehmungen durch Beschnitt der Laderaumseitenverkleidungen unmittelbar vor Montage der Aufnahmeböcke an denselben ausgebildet, woraus keinerlei Beeinträchtigung, insbesondere optische Beeinträchtigen der besagten Basisausführung des Fahrzeugs resultiert. Alternativ kann es jedoch angezeigt sein, auch für besagte Basisausführung des Fahrzeugs Laderaumseitenverkleidungen mit bereits ausgebildeten Bohrungen und/oder Ausnehmungen zur Montage bereitzustellen, wobei es dann sicherlich von Vorteil ist, besagte Bohrungen und/oder Ausnehmungen mit Abdeckelementen zu versehen und im Falle der Bestückung des Laderaums mit dem in Rede stehenden Ladeboden, die Bohrungen und/oder Ausnehmungen durch Entfernung der Abdeckelemente freizulegen.

Gemäß einer weiteren Alternative kann es auch von Vorteil sein, die Laderaumseitenverkleidungen im Bereich besagter Bohrungen und/oder Ausnehmungen mit einer Sollbruchstelle, beispielsweise mit einer Perforation zu versehen, welche eine komfortable Ausbildung der Bohrungen und/oder Ausnehmungen allein durch Herausreißen beziehungsweise Herausdrücken der entsprechender Materialabschnitte ermöglicht.

Um einen besonders festen Verbund der Aufnahmeböcke mit dem Fahrzeug zu gewährleisten, sind weiter bevorzugt die Aufnahmeböcke zusätzlich mittels mechanischer Befestigungselemente unmittelbar an der Karosserie des Fahrzeugs befestigt oder befestigbar.

Wie die Erfindung weiter vorsieht, sind die Aufnahmeböcke im montierten Zustand auf dem Boden des Laderaums abgestützt, wodurch vorteilhaft auch bei erhöhter Belastung derselben insbesondere in Fahrzeughochrichtung (z-Richtung) eine sichere Abstützung von Ladegut gewährleistet ist.

Das Verfahren zur Montage zumindest eines Ladebodens in einem Laderaum eines Fahrzeugs, insbesondere eines Kraftfahrzeugs, welches in Fahrzeugquerrichtung (y-Richtung) gesehen gegenüberliegend angeordnete und an der Karosserie des Fahrzeugs lösbar befestigte Laderaumseitenverkleidungen aufweist, zeichnet sich bevorzugt durch folgende Schritte aus: a1) Bereitstellung eines Ladebodensystems, welches zumindest je einen an besagten, in Fahrzeugquerrichtung (y-Richtung) gesehen gegenüberliegend angeordneten Laderaumseitenverkleidungen des Laderaums montierbaren Aufnahmebock sowie zumindest einen im montierten Zustand derselben auf diesen ablegbaren oder in diesen einlegbaren Ladeboden aufweist,
b1) Lösen der Laderaumseitenverkleidungen von der Karosserie des Fahrzeugs,
c1) Befestigung der Aufnahmeböcke an der jeweils zugeordneten Laderaumseitenverkleidung,
d1) Befestigung der jeweils zumindest einen Aufnahmebock aufweisenden Laderaumseitenverkleidungen an der Karosserie des Fahrzeugs,
e1) zusätzliche Befestigung der Aufnahmeböcke unmittelbar an der Karosserie des Fahrzeugs, und
f1) Ablegen des zumindest einen Ladebodens auf oder Einlegen desselben in besagte Aufnahmeböcke.

Dieses Montageverfahren eröffnet vorteilhaft die Möglichkeit, auf äußerst einfache und kostengünstige Weise im Rahmen insbesondere einer Nachrüstlösung den Laderaum eines Fahrzeugs mit einem gesonderten beziehungsweise zusätzlichen Ladeboden auszustatten.

Gemäß einer alternativen Ausgestaltung des erfindungsgemäßen Montageverfahrens zeichnet sich dasselbe durch folgende Schritte aus:
a2) Bereitstellung eines Ladebodensystems, welches zumindest je einen an besagten, in Fahrzeugquerrichtung (y-Richtung) gesehen gegenüberliegend angeordneten Laderaumseitenverkleidungen des Laderaums montierbaren Aufnahmebock sowie zumindest einen im montierten Zustand derselben auf diesen ablegbaren oder in diesen einlegbaren Ladeboden aufweist,
b2) Verbringung der Aufnahmeböcke in eine Befestigungsstellung zur betreffenden Laderaumseitenverkleidung,
c2) Befestigung der Aufnahmeböcke an der jeweils zugeordneten Laderaumseitenverkleidung und/oder an der Karosserie des Fahrzeugs, und
d2) Ablegen des zumindest einen Ladebodens auf oder Einlegen desselben in besagte Aufnahmeböcke.

Hierdurch ist im Hinblick auf das vorbeschriebene Montageverfahren der unmittelbare Montageaufwand gemindert, da die Schritte b1) und d1) entbehrlich sind, erfordert jedoch erhöhten Aufwand bezüglich der Zuordnung, Anordnung und Ausbildung geeigneter Befestigungsmittel, um insbesondere nicht völlig vermeidbare Toleranzen ausgleichen zu können.

Gemäß einer praxisnahen Ausgestaltung der erfindungsgemäßen Verfahren ist bevorzugt vorgesehen, dass im Hinblick auf den Schritt c1) oder c2) die Laderaumseitenverkleidungen vorab einen Beschnitt derart erfahren, dass in denselben Bohrungen und/oder Ausnehmungen für korrespondierende Befestigungselemente ausgebildet werden. Alternativ kann es jedoch angezeigt sein, dass Laderaumseitenverkleidungen mit bereits ausgebildeten Bohrungen und/oder Ausnehmungen zur Montage bereitgestellt werden, wobei es dann sicherlich von Vorteil ist, besagte Bohrungen und/oder Ausnehmungen mit Abdeckelementen zu versehen und im Falle der Bestückung des Laderaums mit dem in Rede stehenden Ladeboden, die Bohrungen und/oder Ausnehmungen durch Entfernung der Abdeckungen freizulegen. Gemäß einer weiteren Alternative kann es auch von Vorteil sein, die zur Montage bereitgestellten Laderaumseitenverkleidungen vorab im Bereich besagter Bohrungen und/oder Ausnehmungen mit einer Sollbruchstelle, beispielsweise mit einer Perforation auszubilden, welche eine komfortable Ausbildung der Bohrungen und/oder Ausnehmungen allein durch Herausreißen beziehungsweise Herausdrücken der entsprechender Materialabschnitte ermöglicht.

In Fortbildung der besagten Montageverfahren ist ferner vorgesehen, dass im Hinblick auf den Schritt d1) oder c2) vorab ein etwaiger auf dem Boden des Laderaums angeordneter und gegebenenfalls eine Reserveradmulde besagten Bodens abdeckender Bodenbelag dem Laderaum entnommen und bedarfsweise eine etwaige bereitgestellte Auskleidung der Reserveradmulde in derselben angeordnet wird. Hierdurch sind Voraussetzungen geschaffen, auch den unterhalb des montierten Ladebodens zu verzeichnenden Stauraum optimal auszugestalten und zu nutzen.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies werden Begriffe wie "vorne", "hinten", "oben" "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicherweise gebraucht werden. Es zeigen:
- Fig. 1: äußerst schematisch ein Fahrzeug, welchem ein erfindungswesentliches Ladebodensystem zugeordnet ist,
- Fig. 2: eine perspektivische Einzeldarstellung eines Laderaums des Fahrzeugs nach Fig. 1,
- Fig. 3: eine perspektivische Darstellung des erfindungswesentlichen, dem Laderaum des Fahrzeugs zugeordneten Ladebodensystems,
- Fig. 4: eine Einzeldarstellung eines Laderaumseitenverkleidungsteils,
- Fig. 5: das Laderaumseitenverkleidungsteil nach Fig. 4 bestückt mit einem Aufnahmebock des Ladebodensystems in einer Vorderansicht,
- Fig. 6: Das Laderaumseitenverkleidungsteil nach Fig. 5 in einer Rückansicht,
- Fig. 7: die Einzelheit "Z" nach Fig. 6,
- Fig. 8: ein Karosserieseitenteil der Rohbaukarosserie des Kraftfahrzeugs in einer Ansicht vom Laderaum her, an welchem das Laderaumseitenverkleidungsteil befestigbar ist,
- Fig. 9: das Karosserieseitenteil nach Fig. 8 in einer Rückansicht samt eines daran befestigten Laderaumseitenverkleidungsteils,
- Fig. 10: äußerst schematisch einen Endmontagschritt zur Bestückung des Laderaums eines Fahrzeugs mit einem Ladeboden gemäß einer ersten Ausführungsvariante der Erfindung,
- Fig. 11: der Ladeboden nach Fig. 10 in einer Endmontagestellung, und
- Fig. 12: äußerst schematisch einen Endmontagschritt zur Bestückung des Laderaums eines Fahrzeugs mit einem Ladeboden gemäß einer zweiten Ausführungsvariante der Erfindung.

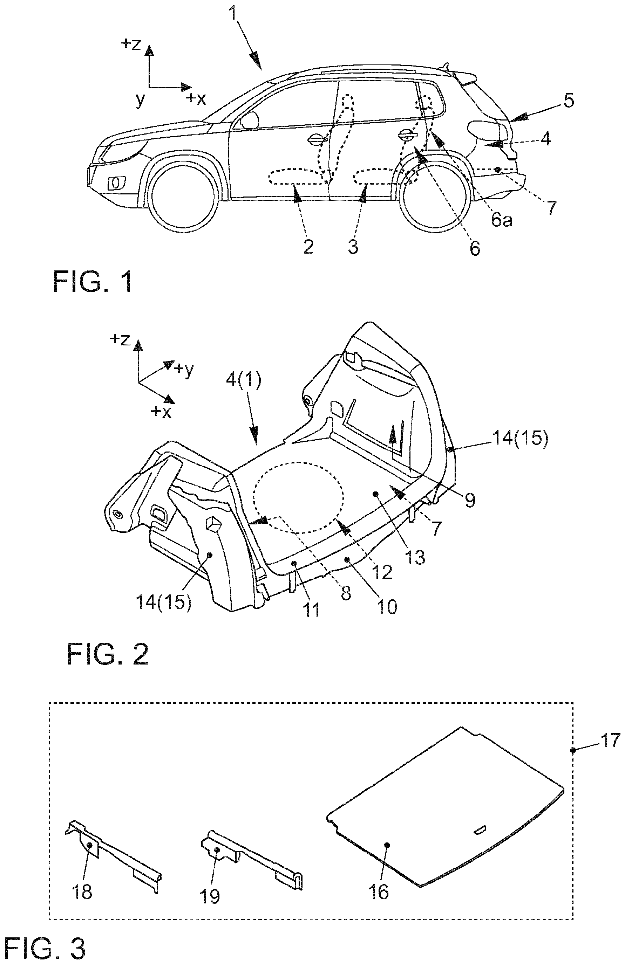

Fig. 1 zeigt äußerst schematisch ein Fahrzeug 1, vorliegend ein Kraftfahrzeug in Form eines Personenkraftwagens, mit einer vorderen Sitzreihe 2 und einer hinteren Rücksitzbank 3 sowie mit einem hinter der Rücksitzbank 3 angeordneten Laderaum 4, auch als Kofferraum bezeichnet, welcher mittels einer Heckklappe 5 des Fahrzeugs 1 verschlossen ist. Gemäß Fig. 2 ist der Laderaum 4 nach vorn durch eine Rückenlehne 6 der Rücksitzbank 3, nach unten durch ein einen Boden 7 des Laderaums 4 ausbildendes Unterbodenblech des Fahrzeugs 1, zur Seite durch zwei in Fahrzeugquerrichtung (y-Richtung) gesehen gegenüberliegend angeordnete Laderaumseitenverkleidungen 8, 9, demgemäß durch eine linke und eine rechte Laderaumseitenverkleidung 8, 9, sowie nach hinten durch einen Schlossträger 10 samt einer Schlossträgerabdeckung 11 begrenzt.

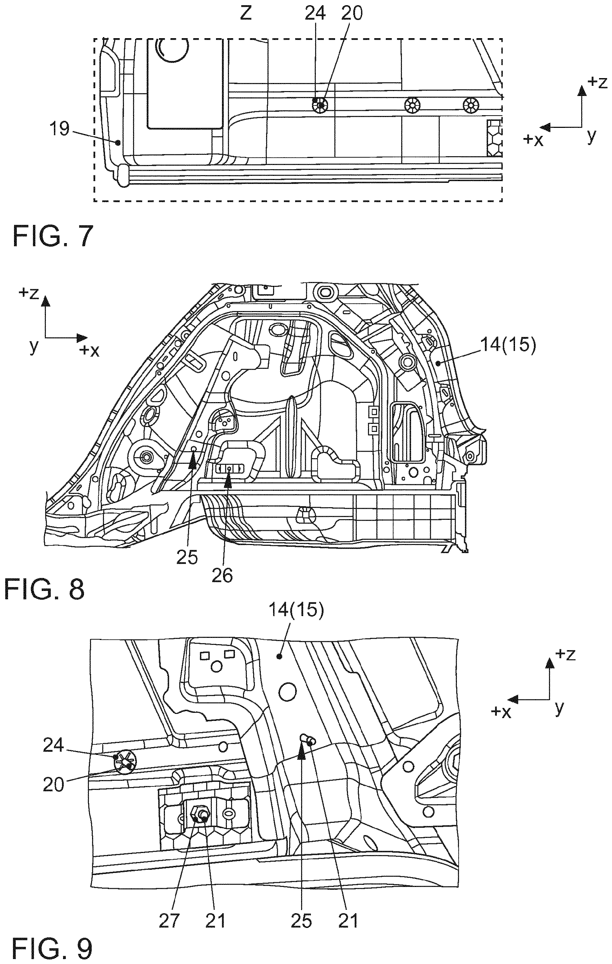

Im besagten Boden 7 respektive im Unterbodenblech ist eine Reserveradmulde 12 ausgebildet, welche in einer Basisausführung des Fahrzeugs 1 mittels eines auf dem Boden 7 angeordneten Bodenbelages 13 abgedeckt ist. Der Bodenbelag 13, auch als Kofferbodenbelag bezeichnet, ist bevorzugt verformungsfest ausgebildet, so dass dieser darauf abgesetzte Lasten, wie beispielsweise Koffer, ohne Verformung tragen kann. Die besagten Laderaumseitenverkleidungen 8, 9 sind ebenfalls bevorzugt verformungsfest ausgebildet und mittels nicht zeichnerisch dargestellter, an sich bekannter, vorzugsweise mechanischer Befestigungselemente, wie Schrauben oder Clipselemente, an je einem korrespondierenden Karosserieseitenteil 14 der Karosserie 15 (vgl. Fig. 8) des Fahrzeugs 1 lösbar befestigt.

Um einem etwaigen Bedarf eines Nutzers eines in der besagten Basisausführung verfügbaren Fahrzeugs 1 nach einem gesonderten beziehungsweise zusätzlichen Ladeboden 16, der bevorzugt in erhöhter Position zum Boden 7 des Laderaums 4 angeordnet ist, gerecht zu werden, ist dem Fahrzeug 1 gemäß Fig. 3 ein nachrüstbares Ladebodensystem 17 zugeordnet beziehungsweise zuordenbar. Das Ladebodensystem 17 weist gemäß diesem Ausführungsbeispiel einen linken, an der linken Laderaumseitenverkleidung 8 und einen rechten an der rechten Laderaumseitenverkleidung 9 befestigbaren Aufnahmebock 18, 19 sowie besagten Ladeboden 16 auf. Der Ladeboden 16 ist gemäß diesem Ausführungsbeispiel durch eine formstabile, selbsttragende Platte gebildet, welche weiter bevorzugt aus einem Kunststoff oder einem Verbundwerkstoff, wie einem faserverstärkten Kunststoff, besteht. Ausgenommen Fig. 9, ist in den Zeichnungsfiguren der Einfachheit halber lediglich die rechte Laderaumseitenverkleidung 9 gezeigt.

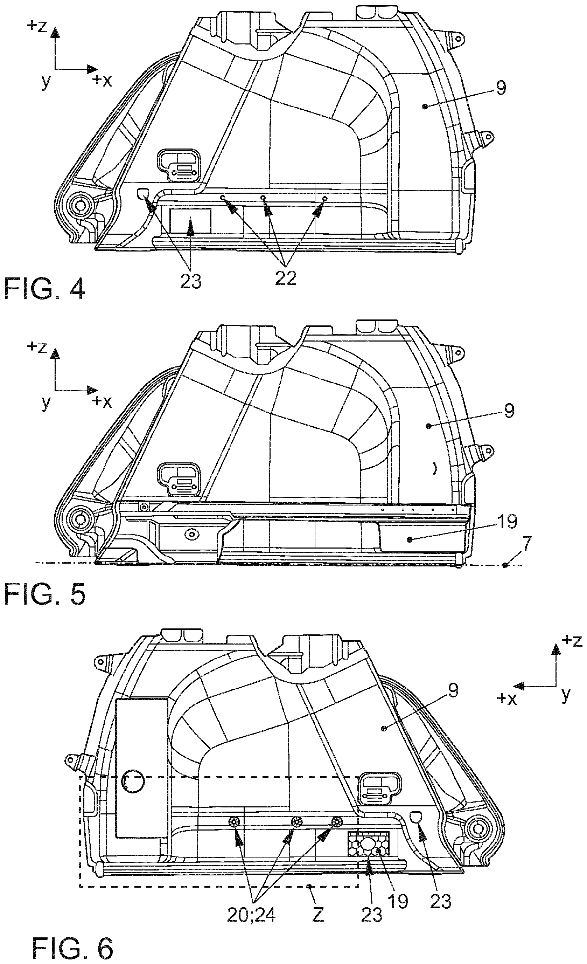

Gemäß diesem Ausführungsbeispiel sind der linke und der rechte Aufnahmebock 18, 19 aus einem Kunststoff oder einem Verbundwerkstoff, wie einem faserverstärkten Kunststoff, nach bevorzugt einem an sich bekannten Kunststoff-Spritzgießverfahren hergestellt. Die Haupterstreckungsrichtung der Aufnahmeböcke 18, 19 im montierten Zustand derselben ist in Fahrzeuglängsrichtung (x-Richtung). Gemäß den Fig. 5, 10 und 11 erstrecken sich dieselben im besagten montierten Zustand entlang der jeweils zugeordneten Laderaumseitenverkleidung 8, 9 und zwar von der Rückenlehne 6 der Rücksitzbank 3 bis zum Schlossträger 10.

Die Aufnahmeböcke 18, 19 sind gemäß diesem Ausführungsbeispiel sowohl mittels erster mechanischer Befestigungselemente 20 (vgl. Fig. 6, 7 und 9) an der betreffenden Laderaumseitenverkleidung 8, 9 als auch mittels zweiter mechanischer Befestigungselemente 21 unmittelbar am zugeordneten Karosserieseitenteil 14 der Karosserie 15 des Fahrzeugs 1 befestigbar. Hierzu weisen die Laderaumseitenverkleidungen 8, 9 sowohl erste Mittel zur Befestigung der Aufnahmeböcke 18, 19 an denselben in Form von Bohrungen 22 als auch zweite Mittel zur Befestigung der Aufnahmeböcke 18, 19 am zugeordneten Karosserieseitenteil 14 der Karosserie 15 des Fahrzeugs 1 in Form von Ausnehmungen 23 auf.

Die Bohrungen 22 korrespondieren mit besagten ersten Befestigungselementen 20 in Form von Befestigungsstiften, die ihrerseits im montierten Zustand der Aufnahmeböcke 18, 19 je eine Bohrung 22 der betreffenden Laderaumseitenverkleidung 8, 9 durchsetzen. Die Befestigungsstifte sind bevorzugt einstückig mit dem Aufnahmebock 18, 19 ausgebildet, weiter bevorzugt als Einlegeteil im Rahmen des oben bereits erwähnten Kunststoff-Spritzgießverfahrens in denselben eingegossen. Das freie Ende eines jeden die betreffende Bohrung 22 durchsetzenden Befestigungsstiftes ist rückseitig der Laderaumseitenverkleidungen 8, 9 mit einem Sicherungselement 24, vorliegend in Form einer Klemmscheibe bestückt, wodurch die Aufnahmeböcke 18, 19 an der betreffenden Laderaumseitenverkleidung 8, 9 festgelegt sind (vgl. Fig. 6, 7 und 9).

Die Ausnehmungen 23 korrespondieren mit den zweiten Befestigungselementen 21, welche gemäß diesem Ausführungsbeispiel durch Befestigungsschrauben gebildet sind (vgl. Fig. 5, 6, 8 und 9). Die Befestigungsschrauben durchsetzen dabei die jeweils zugeordnete Ausnehmung 23 der Laderaumseitenverkleidungen 8, 9 und sind mit dem Karosserieseitenteil 14 der Karosserie 15 verschraubt (vgl. Fig. 9). Gemäß Fig. 9 ist eine der Befestigungsschrauben in eine Gewindebohrung 25 des Karosserieseitenteils 14 eingeschraubt, wogegen die andere Befestigungsschraube eine Bohrung 26 im Karosserieseitenteil 14 durchsetzt und mittels einer Schraubenmutter 27 am Karosserieseitenteil 14 festgelegt ist.

Bevorzugt sind die Bohrungen 22 und Ausnehmungen 23 durch Beschnitt der Laderaumseitenverkleidungen 8, 9 unmittelbar vor Montage der Aufnahmeböcke 18, 19 an den Laderaumseitenverkleidungen 8, 9 ausgebildet. Alternativ kann es jedoch angezeigt sein, für besagte Basisausführung des Fahrzeugs 1 Laderaumseitenverkleidungen 8, 9 mit bereits ausgebildeten Bohrungen 22 und Ausnehmungen 24 vorzusehen, wobei es dann sicherlich von Vorteil ist, besagte Bohrungen 22 und Ausnehmungen 23 mit Abdeckelementen zu versehen und im Falle der Bestückung des Laderaums 4 mit den Aufnahmeböcken 18, 19 als Voraussetzung für die Anordnung des Ladebodens 16 im Laderaum 4, die Bohrungen 22 und Ausnehmungen 23 durch Entfernung der Abdeckelemente freizulegen (nicht zeichnerisch dargestellt).

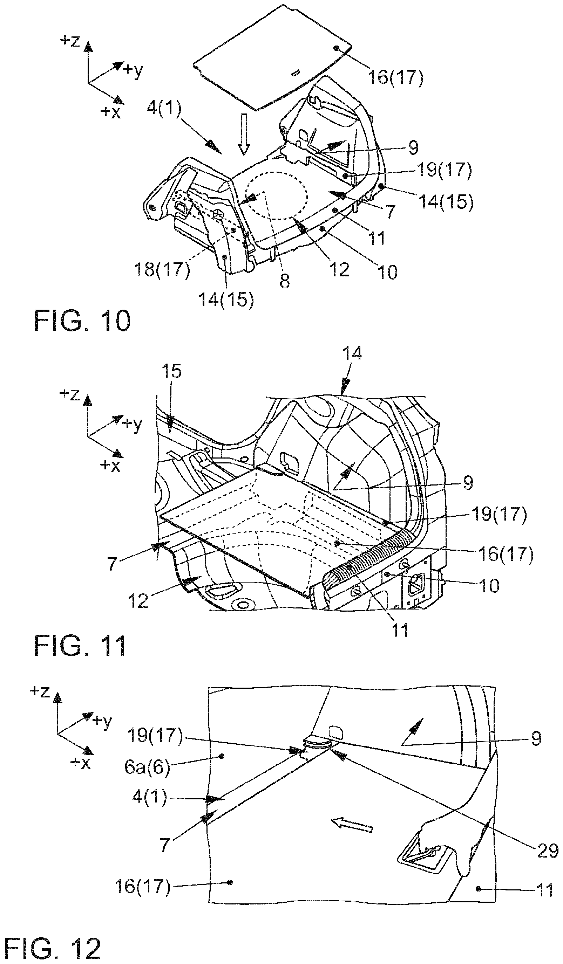

Wie insbesondere der Fig. 5 sehr gut zu entnehmen ist, sind die Aufnahmeböcke 18, 19 derart angeordnet, dass sich diese im montierten Zustand am Boden 7 des Laderaums 4 abstützen. Die hieraus resultierenden Vorteile wurden bereits oben beschrieben. Darüber hinaus weisen die Aufnahmeböcke 18, 19 bevorzugt eine derartige Höhenerstreckung (in Z-Richtung) auf, dass eine durch einen auf den Aufnahmeböcken 18, 19 positionierten Ladeboden 16 gebildete erste Ladefläche (vgl. insbes. Fig. 11 und 12) bei nach Fahrzeug-vorn umgelegter Rückenlehne 6 der hinteren Rücksitzbank 3 des Fahrzeugs 1, deren rückseitige Fläche 6a im umgelegten Zustand der Rückenlehne 6 eine zweite, vorliegend nicht zeichnerisch dargestellte zweite Ladefläche ausbildet, in der Ebene der zweiten Ladefläche angeordnet ist.

Nachstehend werden geeignete Montageverfahren zur Anordnung eines Ladebodens 16 in erhöhter Position zum Boden 7 des Laderaums 4 in demselben beschrieben.

Ausgehend von beispielsweise einer Basisausführung des Fahrzeugs 1 und einem demselben zugeordneten Ladebodensystem 17, welches besagte Aufnahmeböcke 18, 19 sowie einen Ladeboden 16 aufweist beziehungsweise umfasst, ist gemäß einer bevorzugten Vorgehensweis zunächst vorgesehen, die Laderaumseitenverkleidungen 8, 9, welche vorzugsweise mittels an sich bekannter Clipselemente und/oder Befestigungsschrauben an dem jeweiligen Karosserieseitenteil 14 befestigt sind, von demselben zu lösen. Im Anschluss daran, vorzugsweise außerhalb des Laderaums 4 beziehungsweise des Fahrzeugs 1, erfahren die Laderaumseitenverkleidungen 8, 9 einen Beschnitt derart, dass in denselben die vorgenannten Bohrungen 22 und Ausnehmungen 23 für die korrespondierenden Befestigungselemente 20, 21 ausgebildet werden. Hiernach werden die Aufnahmeböcke 18, 19 mit der jeweils zugeordneten Laderaumseitenverkleidung 8, 9 verbunden, indem zunächst die ersten Befestigungselemente 20 in Form der Befestigungsstifte mit ihrem freien Ende in die Bohrungen 22 eingefädelt werden und nachfolgend mittels je eines Sicherungselements 24, vorliegend je einer Klemmscheibe, derart von der Rückseite der betreffenden Laderaumseitenverkleidung 8, 9 her fixiert werden, dass ein fester Fügeverbund zwischen der Laderaumseitenverkleidung 8, 9 und dem daran angebrachten Aufnahmebock 18, 19 bewirkt ist. Danach werden die mit dem jeweiligen Aufnahmebock 18, 19 bestückten Laderaumseitenverkleidungen 8, 9 wieder am Karosserieseitenteil 14 der Karosserie 15 des Fahrzeugs 1 befestigt. Um einen besonders festen Verbund insbesondere der Aufnahmeböcke 18, 19 mit der Karosserie 15 des Fahrzeugs 1 zu bewirken, werden die Aufnahmeböcke 18, 19 zusätzlich mittels der vorerwähnten zweiten Befestigungselemente 21 in Form von Befestigungsschrauben unmittelbar mit dem Karosserieseitenteil 14 der Karosserie 15 verbunden. Ist all dies geschehen, kann gemäß den Fig. 10 und 11 der Ladeboden 16 auf die montierten Aufnahmeböcke 18, 19 abgelegt werden.

Das Ausführungsbeispiel nach Fig. 12 unterscheidet sich zum Ausführungsbeispiel nach den Fig. 10 und 11 lediglich dadurch, dass die Aufnahmeböcke 18, 19 seitliche Führungen 29 für den Ladeboden 16 aufweisen, welche U-profilförmig ausgebildet sind und den Ladeboden 16 im montierten Zustand in Fahrzeughochrichtung (z-Richtung) fixieren. Die Führungen 29 sind in einem fahrzeugfrontseitigen Abschnitt der Aufnahmeböcke 18, 19 ausgebildet, so dass ein leicht schräges Einführen beziehungsweise Einlegen des Ladebodens 16 von Fahrzeug-hinten nach Fahrzeug-vorn in besagte Führungen 29 und nachfolgendes Ablegen desselben auf die Aufnahmeböcke 18, 19 ermöglicht ist.

Gemäß einer alternativen Vorgehensweise zur Anordnung des Ladebodens 16 im Laderaum 4 ist vorgesehen, dass die Laderaumseitenverkleidungen 8, 9, welche vorzugsweise mittels an sich bekannter Clipselemente und/oder Befestigungsschrauben an dem jeweiligen Karosserieseitenteil 14 montiert sind, im Laderaum 4 verbleiben und innerhalb des Laderaums 4 einen Beschnitt derart erfahren, dass in diesen die vorgenannten Bohrungen 22 und Ausnehmungen 23 für die korrespondierende Befestigungselemente 20, 21 ausgebildet werden. Hiernach werden die Aufnahmeböcke 18, 19 in ihre jeweilige Fügeposition zur zugeordneten Laderaumseitenverkleidung 8, 9 verbracht und anschließend an der betreffenden Laderaumseitenverkleidung 8, 9 und/oder am Karosserieseitenteil 14 der Karosserie 15 des Fahrzeugs 1 bevorzugt durch Verschraubung befestigt. Hier schließt sich dann das Ablegen des Ladebodens 16 auf die Aufnahmeböcke 18, 19 oder das Einlegen des Ladebodens 16 in besagte Führungen 29 der Aufnahmeböcke 18, 19 an.

Was den oben bereits erwähnten und auf dem Boden 7 des Laderaums 4 angeordneten sowie die Reserveradmulde 12 des Bodens 7 abdeckender Bodenbelag 13 anbelangt, wird dieser vorzugsweise vor Einbau der Aufnahmeböcke 18, 19 im Laderaum 4 demselben entnommen. Bedarfsweise kann ferner eine nicht zeichnerisch dargestellte Auskleidung der Reserveradmulde 12 in dieser angeordnet werden.

Die vorstehend beschriebenen Ausführungsbeispiele der Erfindung stellen auf je einen einer Laderaumseitenverkleidung 8, 9 zugeordneten Aufnahmebock 18, 19 ab. Durch die Erfindung mit erfasst sind jedoch auch zwei oder mehr Ladeböcke 18, 19 je Laderaumseitenverkleidung 8, 9, welche separat voneinander sowie gegebenenfalls beabstandet voneinander an der betreffenden Laderaumseitenverkleidung 8, 9 und/oder am Karosserieseitenteil 14 der Karosserie 15 montiert oder montierbar sind (nicht zeichnerisch dargestellt).

### Bezugszeichenliste

- 1: Fahrzeug
- 2: vordere Sitzreihe
- 3: Rücksitzbank
- 4: Laderaum
- 5: Heckklappe
- 6: Rückenlehne
- 6a: rückseitige Fläche (Rückenlehne 6)
- 7: Boden
- 8: Laderaumseitenverkleidung
- 9: Laderaumseitenverkleidung
- 10: Schlossträger
- 11: Schlossträgerabdeckung
- 12: Reserveradmulde
- 13: Bodenbelag
- 14: Karosserieseitenteil
- 15: Karosserie
- 16: Ladeboden
- 17: Ladebodensystem
- 18: Aufnahmebock
- 19: Aufnahmebock
- 20: Befestigungselement
- 21: Befestigungselement
- 22: Bohrung
- 23: Ausnehmung
- 24: Sicherungselement
- 25: Gewindebohrung
- 26: Bohrung
- 27: Schraubenmutter
- 29: Führung

## Patentansprüche

1. Fahrzeug (1), insbesondere Kraftfahrzeug, mit einem Laderaum (4), welcher in Fahrzeugquerrichtung (y-Richtung) gesehen gegenüberliegend angeordnete und an der Karosserie (15) des Fahrzeugs (1) lösbar befestigte Laderaumseitenverkleidungen (8, 9) aufweist, sowie mit einem dem Laderaum (4) des Fahrzeugs (1) zugeordneten Ladebodensystem (17), wobei das Ladebodensystem (17) zumindest je einen an den gegenüberliegend angeordneten Laderaumseitenverkleidungen (8, 9) montierten oder montierbaren Aufnahmebock (18, 19) sowie zumindest einen im montierten Zustand der Aufnahmeböcke (18, 19) auf diesen abgelegten oder ablegbaren oder in diesen eingelegten oder einlegbaren Ladeboden (16) aufweist, **dadurch gekennzeichnet, dass** die Aufnahmeböcke (18, 19) derart im Laderaum (4) montiert oder montierbar sind, dass eine vom zumindest einen auf den Aufnahmeböcken (18, 19) abgelegten oder ablegbaren oder in diesen eingelegten oder einlegbaren Ladeboden (16) gebildete erste Ladefläche bei einer nach Fahrzeug-vorn umgelegten Rückenlehne (6) einer hinteren Rücksitzbank (3) des Fahrzeugs (1), deren rückseitige Fläche (6a) im umgelegten Zustand der Rückenlehne (6) eine zweite Ladefläche ausbildet, in der Ebene der besagten zweiten Ladefläche angeordnet ist.

2. Fahrzeug (1) nach dem vorhergehenden Anspruch, **dadurch gekennzeichnet, dass** die Laderaumseitenverkleidungen (8, 9) Mittel zur Befestigung der Aufnahmeböcke (18, 19) an denselben aufweisen.

3. Fahrzeug (1) nach Anspruch 2, **dadurch gekennzeichnet, dass** besagte Mittel zur Befestigung durch Bohrungen (22) und/oder Ausnehmungen (23) zur Aufnahme korrespondierender Befestigungselemente (20) gebildet sind.

4. Fahrzeug (1) nach Anspruch 3, **dadurch gekennzeichnet, dass** die Bohrungen (22) und/oder Ausnehmungen (23) durch Beschnitt der Laderaumseitenverkleidungen (8, 9) unmittelbar vor Montage der Aufnahmeböcke (18, 19) an denselben ausgebildet sind oder dass Laderaumseitenverkleidungen (8, 9) mit bereits ausgebildeten Bohrungen (22) und/oder Ausnehmungen (23) zur Montage bereit gestellt sind.

5. Fahrzeug (1) nach einem der vorhergehenden Ansprüche, **dadurch gekennzeichnet, dass** die Aufnahmeböcke (18, 19) zusätzlich mittels mechanischer Befestigungselemente (21) unmittelbar an der Karosserie (15) des Fahrzeugs (1) befestigt oder befestigbar sind.

6. Fahrzeug (1) nach einem der vorhergehenden Ansprüche, **dadurch gekennzeichnet, dass** die Aufnahmeböcke (18, 19) im montierten Zustand auf dem Boden (7) des Laderaums (4) abgestützt sind.

7. Verfahren zur Montage zumindest eines Ladebodens (16) in einem Laderaum (4) eines Fahrzeugs (1), insbesondere eines Kraftfahrzeugs, welches in Fahrzeugquerrichtung (y-Richtung) gesehen gegenüberliegend angeordnete und an der Karosserie (15) des Fahrzeugs (1) lösbar befestigte Laderaumseitenverkleidungen (8, 9) aufweist, **gekennzeichnet durch** folgende Schritte:
a1) Bereitstellung eines Ladebodensystems (17), welches zumindest je einen an besagten, in Fahrzeugquerrichtung (y-Richtung) gesehen gegenüberliegend angeordneten Laderaumseitenverkleidungen (8, 9) des Laderaums (4) montierbaren Aufnahmebock (18, 19) sowie zumindest einen im montierten Zustand derselben auf diesen ablegbaren oder in diesen einlegbaren Ladeboden (16) aufweist,
b1) Lösen der Laderaumseitenverkleidungen (8, 9) von der Karosserie (15) des Fahrzeugs (1),
c1) Befestigung der Aufnahmeböcke (18, 19) an der jeweils zugeordneten Laderaumseitenverkleidung (8, 9),
d1) Befestigung der jeweils zumindest einen Aufnahmebock (18, 19) aufweisenden Laderaumseitenverkleidungen (8, 9) an der Karosserie (15) des Fahrzeugs (1), e1) zusätzliche Befestigung der Aufnahmeböcke (18, 19) unmittelbar an der Karosserie (15) des Fahrzeugs (1), und
f1) Ablegen des zumindest einen Ladebodens (16) auf oder Einlegen desselben in besagte Aufnahmeböcke (18, 19), oder alternativ
a2) Bereitstellung eines Ladebodensystems (17), welches zumindest je einen an besagten, in Fahrzeugquerrichtung (y-Richtung) gesehen gegenüberliegend angeordneten Laderaumseitenverkleidungen (8, 9) des Laderaums (4) montierbaren Aufnahmebock (18, 19) sowie zumindest einen im montierten Zustand derselben auf diesen ablegbaren oder in diesen einlegbaren Ladeboden (6) aufweist,
b2) Verbringung der Aufnahmeböcke (18, 19) in eine Befestigungsstellung zur betreffenden Laderaumseitenverkleidung (8, 9),
c2) Befestigung der Aufnahmeböcke (18, 19) an der jeweils zugeordneten Laderaumseitenverkleidung (8, 9) und/oder an der Karosserie (15) des Fahrzeugs (1), und
d2) Ablegen des zumindest einen Ladebodens (16) auf oder Einlegen desselben in besagte Aufnahmeböcke (18, 19).

8. Verfahren nach Anspruch 7, **dadurch gekennzeichnet, dass** im Hinblick auf den Schritt c1) oder c2) die Laderaumseitenverkleidungen (8, 9) vorab einen Beschnitt derart erfahren, dass in denselben Bohrungen (22) und/oder Ausnehmungen (23) für korrespondierende Befestigungselemente (20, 21) zur Befestigung der Aufnahmeböcke (18, 19) an der jeweils zugeordneten Laderaumseitenverkleidung (8, 9) und/oder an der Karosserie (15) des Fahrzeugs (1) ausgebildet werden.

9. Verfahren nach Anspruch 7 oder 8, **dadurch gekennzeichnet, dass** im Hinblick auf den Schritt d1) oder c2) vorab ein etwaiger auf dem Boden (7) des Laderaums (4) angeordneter und gegebenenfalls eine Reserveradmulde (12) besagten Bodens (7) abdeckender Bodenbelag (13) dem Laderaum (4) entnommen und bedarfsweise eine etwaige bereitgestellte Auskleidung der Reserveradmulde (12) in derselben angeordnet wird.

## Claims

1. Vehicle (1), in particular motor vehicle, with a luggage compartment (4) which, as seen in the transverse direction of the vehicle (y direction), has oppositely arranged luggage compartment side panels (8, 9) fastened releasably to the body (15) of the vehicle (1), and with a loading floor system (17) assigned to the luggage compartment (4) of the vehicle (1), wherein the loading floor system (17) has at least in each case one receiving bracket (18, 19) which is mounted or can be mounted on the oppositely arranged luggage compartment side panels (8, 9), and also at least one loading floor (16) which, in the mounted state of the receiving brackets (18, 19), is deposited or can be deposited thereon or is inserted or can be inserted therein, **characterized in that** the receiving brackets (18, 19) are mounted or can be mounted in the luggage compartment (4) in such a manner that a first loading surface formed by the at least one loading floor (16), which is deposited or can be deposited on the receiving brackets (18, 19) or is inserted or can be inserted therein, when a backrest (6) of a rear seat bench (3) of the vehicle (1) is folded over towards the front of the vehicle, the rear-side surface (6a) of which forms a second loading surface in the folded-over state of the backrest (6), is arranged in the plane of said second loading surface.

2. Vehicle (1) according to the preceding claim, **characterized in that** the luggage compartment side panels (8, 9) have means for fastening the receiving brackets (18, 19) on same.

3. Vehicle (1) according to Claim 2, **characterized in that** said means for fastening are formed by bores (22) and/or recesses (23) for receiving corresponding fastening elements (20).

4. Vehicle (1) according to Claim 3, **characterized in that** the bores (22) and/or recesses (23) are formed by trimming the luggage compartment side panels (8, 9) directly before the receiving brackets (18, 19) are mounted on same, or **in that** luggage compartment side panels (8, 9) are provided with bores (22) and/or recesses (23) already formed for the mounting.

5. Vehicle (1) according to one of the preceding claims, **characterized in that** the receiving brackets (18, 19) are additionally fastened or can be fastened directly to the body (15) of the vehicle (1) by means of mechanical fastening elements (21).

6. Vehicle (1) according to one of the preceding claims, **characterized in that** the receiving brackets (18, 19) in the mounted state are supported on the floor (7) of the luggage compartment (4).

7. Method for mounting at least one loading floor (16) in a luggage compartment (4) of a vehicle (1), in particular a motor vehicle, which, as seen in the transverse direction of the vehicle (y direction), has oppositely arranged luggage compartment side panels (8, 9) fastened releasably to the body (15) of the vehicle (1),
**characterized by** the following steps:
a1) providing a loading floor system (17) which has at least in each case one receiving bracket (18, 19) which can be mounted on said luggage compartment side panels (8, 9) of the luggage compartment (4), which are arranged opposite each other, as seen in the transverse direction of the vehicle (y direction), and at least one loading floor (16) which, in the mounted state of said receiving brackets, can be deposited thereon or can be inserted therein,
b1) releasing the luggage compartment side panels (8, 9) from the body (15) of the vehicle (1),
c1) fastening the receiving brackets (18, 19) to the respectively assigned luggage compartment side panel (8, 9),
d1) fastening the luggage compartment side panels (8, 9) having in each case at least one receiving bracket (18, 19) to the body (15) of the vehicle (1),
e1) additionally fastening the receiving brackets (18, 19) directly to the body (15) of the vehicle (1), and
f1) depositing the at least one loading floor (16) on, or inserting same in, said receiving brackets (18, 19), or alternatively
a2) providing a loading floor system (17) which has at least in each case one receiving bracket (18, 19) which can be mounted on said luggage compartment side panels (8, 9) of the luggage compartment (4), which are arranged opposite each other, as seen in the transverse direction of the vehicle (y direction), and at least one loading floor (6) which, in the mounted state of said receiving brackets, can be deposited thereon or can be inserted therein,
b2) bringing the receiving brackets (18, 19) into a fastening position with respect to the relevant luggage compartment side panel (8, 9),
c2) fastening the receiving brackets (18, 19) to the respectively assigned luggage compartment side panel (8, 9) and/or to the body (15) of the vehicle (1), and
d2) depositing the at least one loading floor (16) on, or inserting same in, said receiving brackets (18, 19).

8. Method according to Claim 7, **characterized in that**, with regard to step c1) or c2), the luggage compartment side panels (8, 9) are trimmed beforehand in such a manner that bores (22) and/or recesses (23) are formed in same for corresponding fastening elements (20, 21) for fastening the receiving brackets (18, 19) to the respectively assigned luggage compartment side panel (8, 9) and/or to the body (15) of the vehicle (1).

9. Method according to Claim 7 or 8, **characterized in that**, with regard to step d1) or c2), a possible floor covering (13) which is arranged on the floor (7) of the luggage compartment (4) and optionally covers a spare wheel hollow (12) in said floor (7) is removed beforehand from the luggage compartment (4) and, if required, a possible lining provided for the spare wheel hollow (12) is arranged in same.

## Revendications

1. Véhicule (1), notamment véhicule automobile, muni d'un espace de chargement (4), qui comprend des habillages latéraux d'espace de chargement (8, 9), agencés l'un à l'opposé de l'autre vus dans la direction transversale du véhicule (direction y) et fixés de manière amovible sur la carrosserie (15) du véhicule (1), et muni d'un système de plancher de chargement (17) associé à l'espace de chargement (4) du véhicule (1), le système de plancher de chargement (17) comprenant respectivement au moins un support de réception (18, 19) monté ou pouvant être monté sur les habillages latéraux d'espace de chargement (8, 9) agencés l'un à l'opposé de l'autre, ainsi qu'au moins un plancher de chargement (16) déposé ou pouvant être déposé sur les supports de réception (18, 19), ou introduit ou pouvant être introduit dans ceux-ci, à l'état monté de ceux-ci, **caractérisé en ce que** les supports de réception (18, 19) sont montés ou peuvent être monté dans l'espace de chargement (4) de telle sorte qu'une première surface de chargement formée par au moins un plancher de chargement (16) déposé ou pouvant être déposé sur les supports de réception (18, 19), ou introduit ou pouvant être introduit dans ceux-ci, est agencée, lorsqu'un dossier (6) d'une banquette arrière (3) du véhicule (1) est rabattue vers l'avant du véhicule, dont la surface arrière (6a) forme une deuxième surface de chargement à l'état rabattu du dossier (6), dans le plan de ladite deuxième surface de chargement.

2. Véhicule (1) selon la revendication précédente, **caractérisé en ce que** les habillages latéraux d'espace de chargement (8, 9) comprennent des moyens pour la fixation des supports de réception (18, 19) sur ceux-ci.

3. Véhicule (1) selon la revendication 2, **caractérisé en ce que** lesdits moyens pour la fixation sont formés par des alésages (22) et/ou des évidements (23) pour la réception d'éléments de fixation correspondants (20).

4. Véhicule (1) selon la revendication 3, **caractérisé en ce que** les alésages (22) et/ou les évidements (23) sont formés par découpage des habillages latéraux d'espace de chargement (8, 9) directement avant le montage des supports de réception (18, 19) sur ceux-ci, ou **en ce que** les habillages latéraux d'espace de chargement (8, 9) sont fournis avec des alésages (22) et/ou des évidements (23) déjà formés pour le montage.

5. Véhicule (1) selon l'une quelconque des revendications précédentes, **caractérisé en ce que** les supports de réception (18, 19) sont en outre fixés ou peuvent être fixés directement sur la carrosserie (15) du véhicule (1) au moyen d'éléments de fixation mécaniques (21).

6. Véhicule (1) selon l'une quelconque des revendications précédentes, **caractérisé en ce qu'**à l'état monté, les supports de réception (18, 19) sont soutenus sur le plancher (7) de l'espace de chargement (4) .

7. Procédé de montage d'au moins un plancher de chargement (16) dans un espace de chargement (4) d'un véhicule (1), notamment d'un véhicule automobile, qui comprend des habillages latéraux d'espace de chargement (8, 9), agencés l'un à l'opposé de l'autre vus dans la direction transversale du véhicule (direction y) et fixés de manière amovible sur la carrosserie (15) du véhicule (1), **caractérisé par** les étapes suivantes :
a1) la fourniture d'un système de plancher de chargement (17), qui comprend respectivement au moins un support de réception (18, 19) pouvant être monté sur lesdits habillages latéraux d'espace de chargement (8, 9) agencés l'un à l'opposé de l'autre vus dans la direction transversale du véhicule (direction y) de l'espace de chargement (4), ainsi qu'au moins un plancher de chargement (16) pouvant être déposé sur ceux-ci ou pouvant être introduit dans ceux-ci à l'état monté de ceux-ci,
b1) le détachement des habillages latéraux d'espace de chargement (8, 9) de la carrosserie (15) du véhicule (1),
c1) la fixation des supports de réception (18, 19) sur l'habillage latéral d'espace latéral (8, 9) associé respectif,
d1) la fixation des habillages latéraux d'espace de réception (8, 9) comprenant respectivement au moins un support de réception (18, 19) sur la carrosserie (15) du véhicule (1),
e1) la fixation supplémentaire des supports de réception (18, 19) directement sur la carrosserie (15) du véhicule (1), et
f1) le dépôt de l'au moins un plancher de chargement (16) sur ou l'introduction de celui-ci dans lesdits supports de réception (18, 19), ou en variante
a2) la fourniture d'un système de plancher de chargement (17), qui comprend respectivement au moins un support de réception (18, 19) pouvant être monté sur lesdits habillages latéraux d'espace de chargement (8, 9) agencés l'un à l'opposé de l'autre vus dans la direction transversale du véhicule (direction y) de l'espace de chargement (4), ainsi qu'au moins un plancher de chargement (6) pouvant être déposé sur ceux-ci ou pouvant être introduit dans ceux-ci à l'état monté de ceux-ci,
b2) le déplacement des supports de réception (18, 19) dans une position de fixation par rapport à l'habillage latéral d'espace de chargement correspondant (8, 9),
c2) la fixation des supports de réception (18, 19) sur l'habillage latéral d'espace latéral (8, 9) associé respectif et/ou sur la carrosserie (15) du véhicule (1), et
d2) le dépôt de l'au moins un plancher de chargement (16) sur ou l'introduction de celui-ci dans lesdits supports de réception (18, 19).

8. Procédé selon la revendication 7, **caractérisé en ce qu'au** regard de l'étape c1) ou c2), les habillages latéraux d'espace de chargement (8, 9) subissent auparavant un découpage, de telle sorte que des alésages (22) et/ou des évidements (23) pour des éléments de fixation correspondants (20, 21) sont formés dans ceux-ci pour la fixation des supports de réception (18, 19) sur l'habillage latéral d'espace de chargement associé respectif (8, 9) et/ou sur la carrosserie (15) du véhicule (1).

9. Procédé selon la revendication 7 ou 8, **caractérisé en ce qu'**au regard de l'étape d1) ou c2), un revêtement de plancher éventuel (13) agencé sur le plancher (7) de l'espace de chargement (4) et recouvrant éventuellement une cavité de roue de secours (12) dudit plancher (7) est retiré de l'espace de chargement (4) et une garniture éventuelle fournie de la cavité de roue de secours (12) est au besoin agencée dans celui-ci.
